(19) Europäisches Patentamt
European Patent Office
Office européen des brevets

(11) **EP 3 881 969 A1**

(12) **EUROPÄISCHE PATENTANMELDUNG**

(43) Veröffentlichungstag:
**22.09.2021 Patentblatt 2021/38**

(51) Int Cl.:
**B23Q 17/09** (2006.01)      **B23B 29/26** (2006.01)

(21) Anmeldenummer: **20164251.9**

(22) Anmeldetag: **19.03.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Kistler Holding AG**
**8408 Winterthur (CH)**

(72) Erfinder:
• **Keitzel, Gunnar**
**8408 Winterthur (CH)**
• **Kohler, Denis**
**8413 Neftenbach (CH)**

(54) **ZERSPANNUNGSMASCHINE MIT EINEM KRAFTAUFNEHMER, VERWENDUNG EINER SOLCHEN ZERSPANNUNGSMASCHINE SOWIE VERFAHREN ZUM KALIBRIEREN DES KRAFTAUFNEHMERS EINER SOLCHEN ZERSPANNUNGSMASCHINE**

(57) Die Erfindung betrifft eine Zerspanungsmaschine (1) zur spanenden Formgebung eines Werkstücks (9), welche spanende Formgebung in einer zeitlichen Abfolge von Fertigungsschritten mit mehreren benötigten Werkzeugen (14.01 - 14.06) erfolgt; wobei in jedem Fertigungsschritt ein benötigtes Werkzeug (14.01 - 14.06) eine Werkzeugkraft (Kw) auf das Werkstück (9) ausüben kann; mit einer Werkzeughalterung (13) zum Halten der benötigten Werkzeuge (14.01 - 14.06); und mit einem Werkzeugschlitten (11) zum Bewegen der Werkzeughalterung (13), durch welches Bewegen der Werkzeughalterung (13) in jedem Fertigungsschritt eines der benötigten Werkzeuge (14.01 - 14.06) an einem Werkstück (9) ausrichtbar ist und das benötigte Werkzeug (14.01 - 14.06) und das Werkstück (9) zur spanenden Formgebung gegeneinander bewegbar sind; wobei die Werkzeughalterung (13) mindestens zwei Einkomponenten-Kraftaufnehmer (12.1, 12.2, 12.3) aufweist; und wobei die Einkomponenten-Kraftaufnehmer (12.1, 12.2, 12.3) eine bei der spanenden Formgebung eines Werkstücks (9) von einem der benötigten Werkzeuge (14.01 - 14.06) ausgeübte Werkzeugkraft (Kw) im Krafthauptschluss messen.

Fig. 2

**Beschreibung**

**Technisches Gebiet**

Die Erfindung betrifft eine Zerspanungsmaschine mit einem Kraftaufnehmer. Die Erfindung betrifft auch eine Verwendung einer solchen Zerspanungsmaschine. Und die Erfindung betrifft ein Verfahren zum Kalibrieren des Kraftaufnehmers einer solchen Zerspanungsmaschine.

**Stand der Technik**

Zerspanungsmaschinen sind bekannt. Bekannte Zerspanungsmaschinen sind Drehmaschinen, Fräsmaschinen, Sägemaschinen, usw. Mit Zerspanungsmaschinen erfolgt eine spanende Formgebung eines Werkstücks, indem ein Werkzeug mit einem Schneidkeil Werkstoff des Werkstücks abträgt. Dabei übt der Schneidkeil eine Werkzeugkraft aus. Das Werkstück ist aus beliebigem Werkstoff wie Metall, Holz, Kunststoff, usw. Der Schneidkeil ist aus hartem, festem und zähem Schneidstoff wie Metall, Keramik, usw. Bekannte Werkzeuge zur spanenden Formgebung sind Meissel, Drehmeissel, Fräser, Plansenker, Sägeblätter, usw.

Bei der spanenden Formgebung bewegen sich Werkstück und Werkzeug gegeneinander. Sowohl das Werkstück als auch das Werkzeug werden dabei geradlinig oder kreisförmig bewegt. Die Zerspanungsmaschine weist dazu mehrere Antriebseinheiten wie elektrische Antriebseinheiten, pneumatische Antriebseinheiten, usw. auf.

Für eine kostengünstige und qualitativ konstante Fertigung eines Werkstücks ist es wünschenswert, die Werkzeugkraft zu messen, denn die Werkzeugkraft sowie die bei der spanenden Formgebung auftretenden erhöhten Temperaturen haben einen Verschleiss des Schneidkeils zur Folge. Der Verschleiss verändert die Schneidengeometrie des Schneidkeils. Und ein verschlissener Schneidkeil benötigt für die spanende Formgebung des Werkstücks eine grösser Werkzeugkraft, was sich in einem höheren Energieverbrauch der Zerspanungsmaschine äussert und was zudem eine Oberflächengüte und eine Masshaltigkeit des Werkstücks erniedrigt.

EP0433535A1 offenbart eine bekannte Anordnung mit einem Kraftaufnehmer zum Messen der Werkzeugkraft bei der spanenden Formgebung eines Werkstücks in einer Zerspanungsmaschine. Der Kraftaufnehmer ist kraftschlüssig in einer Aussparung eines Maschinenteils eingespannt.

Nachteilig an der bekannten Anordnung ist, dass die Werkzeugkraft nicht dort gemessen wird, wo sie wirkt, also am Schneidkeil, sondern entfernt vom Schneidkeil, nämlich in einem Maschinenteil. Und dort wird die Werkzeugkraft indirekt als im Maschinenteil auftretende mechanische Spannung gemessen. Die mechanische Spannung wiederum wird durch Abmessungen und Masse des Maschinenteils beeinflusst.

Auch ist der Kraftaufnehmer der bekannten Anordnung im Maschinenteil im Kraftnebenschluss angeordnet. Im Kraftnebenschluss wird jedoch nur ein kleiner Teil der dort auftretenden mechanischen Spannung gemessen. All dies führt zu einem wenig genauen Messen der Werkzeugkraft. Eine Genauigkeit beim Messen der Werkzeugkraft gibt eine Abweichung der gemessenen Werkzeugkraft von der tatsächlichen Werkzeugkraft an, je genauer die Werkzeugkraft gemessen wird, desto geringer ist die Abweichung der gemessenen Werkzeugkraft von der tatsächlichen Werkzeugkraft.

Darüber hinaus misst der Kraftaufnehmer der bekannten Anordnung mehrere Kraftkomponenten der Werkzeugkraft. Er misst in x-Richtung eine Vorschubkraft, in y-Richtung eine Passivkraft und in z-Richtung eine Hauptschnittkraft. Für jede Kraftkomponente weist dieser Mehrkomponenten-Kraftaufnehmer mindestens ein Piezoelement auf. Das Piezoelement ist so orientiert, dass es die Kraftkomponente mit hoher Empfindlichkeit erfasst. Die mindestens drei Piezoelemente sind in z-Richtung übereinander gestapelt in einem Gehäuse angeordnet. Dadurch weist der Mehrkomponenten-Kraftaufnehmer ein Baumass mit einer in z-Richtung vergleichsweise grossen Höhe auf. Ein solcher Mehrkomponenten-Kraftaufnehmer wird von der Anmelderin unter der Typenbezeichnung 9027C mit dem Datenblatt 9027C_000-726d-03.10 kommerziell vertrieben. Der Mehrkomponenten-Kraftaufnehmer ist hohlzylinderförmig mit einem Aussendurchmesser von 24.0mm, einem Innendurchmesser von 9.6mm, und einer Höhe von 12.0mm. Auch ist der Mehrkomponenten-Kraftaufnehmer vergleichsweise teuer in der Anschaffung.

Nun erfolgt die spanende Formgebung eines Werkstücks in der Regel in einer zeitlichen Abfolge von Fertigungsschritten mit mehreren benötigten Werkzeugen. Die Werkzeuge werden also öfters gewechselt. In jedem neuen Fertigungsschritt wird ein neues Werkzeug am Werkstück ausgerichtet. Für einen raschen und kostengünstigen Werkzeugwechsel und eine rasche und ebenso kostengünstige Werkzeugausrichtung weist die Zerspanungsmaschine deshalb eine Werkzeughalterung auf. Die Werkzeughalterung hält die für die Fertigungsschritte der spanenden Formgebung benötigten Werkzeuge. Um auf ein neues Werkzeug zu wechseln und um das neue Werkzeug am Werkstück auszurichten, wird dann die Werkzeughalterung relativ zum Werkstück bewegt. Nachdem das neue Werkzeug am Werkstück ausgerichtet ist, werden Werkzeug und Werkstück zur spanenden Formgebung gegeneinander bewegt.

Eine erste Aufgabe der vorliegenden Erfindung ist es, die Werkzeugkraft, die bei der spanenden Formgebung eines Werkstücks in einer Zerspanungsmaschine wirkt, mit einem Kraftaufnehmer genau zu messen. Eine zweite Aufgabe der Erfindung besteht darin, zum Messen der bei der spanenden Formgebung eines Werkstücks wirkenden Werkzeugkraft, einen Kraftaufnehmer platzsparend in der Zerspanungsmaschine anzuordnen. Und als dritte Aufgabe soll die Erfindung, die bei der spanenden Formgebung eines Werkstücks wirkende Werkzeugkraft mit einem Kraftaufnehmer kostengünstig messen.

**Darstellung der Erfindung**

Zumindest eine dieser Aufgaben wird durch die Merkmale der unabhängigen Ansprüche gelöst.

Die Erfindung betrifft eine Zerspanungsmaschine zur spanenden Formgebung eines Werkstücks, welche spanende Formgebung in einer zeitlichen Abfolge von Fertigungsschritten mit mehreren benötigten Werkzeugen erfolgt; wobei in jedem Fertigungsschritt ein benötigtes Werkzeug eine Werkzeugkraft auf das Werkstück ausüben kann; mit einer Werkzeughalterung zum Halten der benötigten Werkzeuge; und mit einem Werkzeugschlitten zum Bewegen der Werkzeughalterung, durch welches Bewegen der Werkzeughalterung in jedem Fertigungsschritt eines der benötigten Werkzeuge an einem Werkstück ausrichtbar ist und das benötigte Werkzeug und das Werkstück zur spanenden Formgebung gegeneinander bewegbar sind; wobei die Werkzeughalterung mindestens zwei Einkomponenten-Kraftaufnehmer aufweist; und wobei die Einkomponenten-Kraftaufnehmer eine bei der spanenden Formgebung eines Werkstücks von einem der benötigten Werkzeuge ausgeübte Werkzeugkraft im Krafthauptschluss messen.

Die Erfindung betrifft auch eine Verwendung einer solchen Zerspanungsmaschine.

Und die Erfindung betrifft ein Verfahren zum Kalibrieren des Kraftaufnehmers einer solchen Zerspanungsmaschine.

Weitere vorteilhafte Lösungen der Aufgabe erfolgen mit in den Merkmalen der abhängigen Ansprüche.

**Kurze Beschreibung der Zeichnungen**

Im Folgenden wird die Erfindung beispielhaft anhand von Zeichnungen erläutert. Dabei zeigt

Fig. 1    eine Ansicht einer Ausführungsform von Teilen einer Zerspanungsmaschine mit einer Werkzeughalterung und einem Kraftaufnehmer;

Fig. 2    in Explosionsdarstellung Teile der Zerspanungsmaschine gemäss Fig. 1;

Fig. 3    schematisch Teile der Zerspanungsmaschine gemäss Fig. 1 in einem Schnitt entlang einer Linie ZZ';

Fig. 4    schematisch Teile der Zerspanungsmaschine gemäss Fig. 1 in einem Schnitt entlang einer Linie XX';

Fig. 5    ein Flussdiagramm mit Verfahrensschritten zum Kalibrieren des Kraftaufnehmers der Zerspanungsmaschine gemäss Fig. 1; und

Fig. 6    schematisch Teile einer Ausführungsform einer Kalibriervorrichtung zur Durchführung der Verfahrensschritte gemäss Fig. 5 mit der Werkzeughalterung der Zerspanungsmaschine gemäss Fig. 1.

Grundsätzlich sind in den Zeichnungen gleiche Teile mit gleichen Bezugszeichen versehen.

**Wege zur Ausführung der Erfindung**

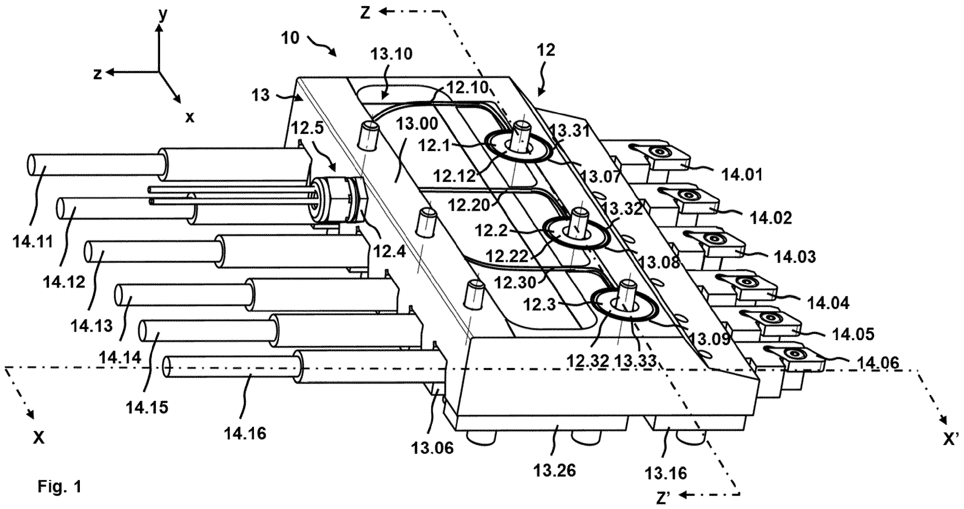

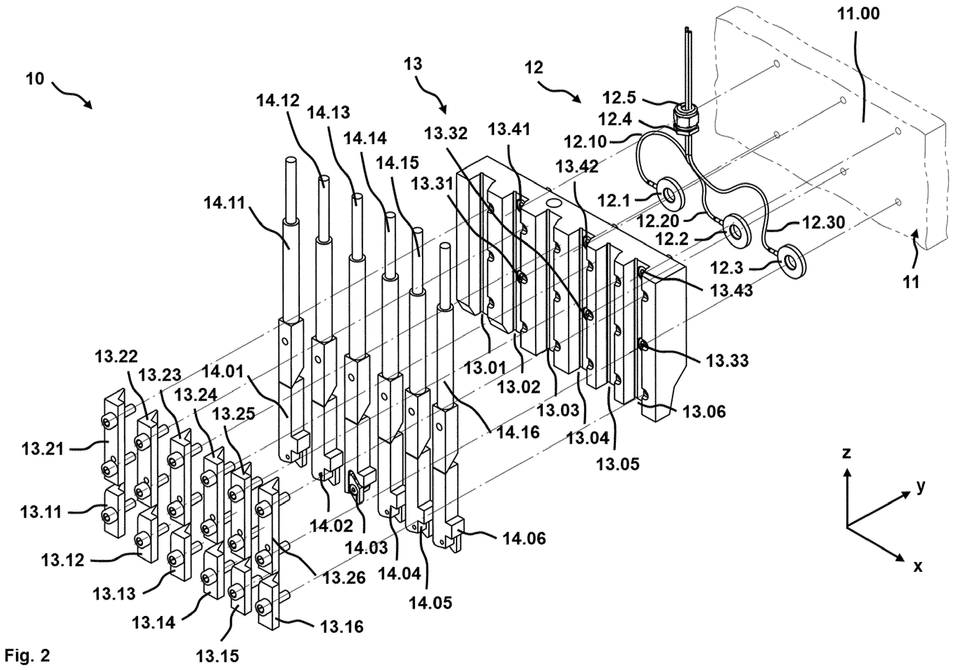

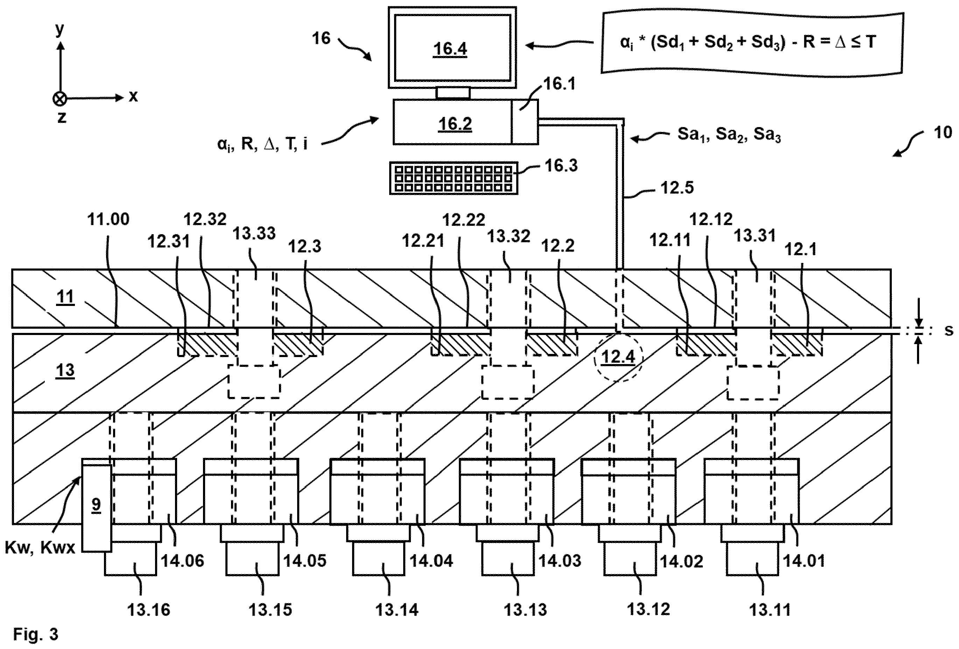

Fig. 1 - 4 zeigen Teile einer Ausführungsform einer Zerspanungsmaschine 1 zur spanenden Formgebung eines Werkstücks 9. Die Zerspanungsmaschine 1 ist in einem orthogonalen Koordinatensystem mit drei Achsen x, y, z angeordnet, die drei Achsen werden auch als Querachse x, Horizontalachse y und Vertikalachse z bezeichnet.

Das Werkstück 9 ist aus beliebigem Werkstoff wie Metall, Holz, Kunststoff, usw.

Die Zerspanungsmaschine 1 weist mehrere benötigte Werkzeuge 14.01 - 14.06 auf. Mit den benötigten Werkzeugen 14.01 - 14.06 erfolgt die spanende Formgebung des Werkstücks 9 n einer zeitlichen Abfolge von Verarbeitungsschritten. Im Beispiel gemäss Fig. 1 - 4 werden in sechs Verarbeitungsschritten sechs Werkzeuge 14.01 - 14.06 benötigt. In einem ersten Fertigungsschritt wird ein erstes Werkzeug 14.01 benötigt, in einem zweiten Fertigungsschritt wird ein zweites Werkzeug 14.02 benötigt, in einem dritten Fertigungsschritt wird ein drittes Werkzeug 14.03 benötigt, in einem vierten Fertigungsschritt wird ein viertes Werkzeug 14.04 benötigt, in einem fünften Fertigungsschritt wird ein fünftes Werkzeug 14.05 benötigt, in einem sechsten Fertigungsschritt wird ein sechstes Werkzeug 14.06 benötigt. Vorzugsweise weist jedes benötigte Werkzeug 14.01 -14.06 eine Kühlmittelzuführung 14.11 - 14.16 auf.

Die benötigten Werkzeuge 14.01 - 14.06 führen bei der spanenden Formgebung des Werkstücks 9 eine Schnittbewegung in einer von der Querachse x und der Vertikalachse z aufgespannten Querebene xz aus. Und die benötigten Werkzeuge 14.01 - 14.06 führen bei der spanenden Formgebung des Werkstücks 9 eine Vorschubbewegung entlang der Horizontalachse y aus. Dabei üben die benötigten Werkzeuge 14.01 - 14.06 eine Werkzeugkraft Kw auf das Werkstück 9 aus. Die Werkzeugkraft Kw weist drei Kraftkomponenten auf. Aufgrund der Schnittbewegung weist die Werkzeugkraft Kw eine Hauptschnittkraftkomponente Kwx in Richtung der Querachse x und eine Passivkraftkomponente Kwz in Richtung der Vertikalachse z auf. Und aufgrund der Vorschubbewegung weist die Werkzeugkraft Kw eine Vorschubkraftkomponente Kwy in Richtung der Horizontalachse y auf. Bei den verschiedenen Arten der spanenden Formgebung ist die Hauptschnittkraftkomponente Kwx betragsmässig die grösste Kraftkomponente. Und im Vergleich der Kraftkomponenten der verschiedenen Arten der spanenden Formgebung untereinander, schwankt der Betrag der Hauptschnittkraftkomponente Kwx am wenigsten. Somit eignet sich die Hauptschnittkraftkomponente Kwx als Indikator für den Verschleiss der bei verschiedenen Arten der spanenden Formgebung benötigten Werkzeuge 14.01 - 14.06.

Die Zerspanungsmaschine 1 weist eine Werkzeughalterung 13 auf. Die Werkzeughalterung 13 hält die für die Fertigungsschritte benötigten Werkzeuge 14.01 - 14.06 in verschiedenen Lagen i, i = 1... 6. Die Werkzeughalterung 13 ist aus mechanisch beständigem Material wie Stahl, Werkzeugstahl, usw. Im Beispiel gemäss Fig. 1 - 4 hält die Werkzeughalterung 13 sechs benötigte Werkzeuge 14.01 - 14.06.

Die Werkzeughalterung 13 hält die benötigten Werkzeuge 14.01 - 14.06 über einen Schaft der benötigten Werkzeuge 14.01 - 14.06. Dazu weist die Werkzeughalterung 13 mehrere Werkzeugaussparungen 13.01 - 13.06 und mehrere Haltemittel 13.11 - 13.16, 13.21 - 13.26 auf.

Vorzugsweise nimmt jeweils eine von sechs Werkzeugaussparungen 13.01 - 13.06 einen Schaft eines der sechs benötigten Werkzeuge 14.01 - 14.06 auf. Die Haltemittel 13.11 - 13.16, 13.21 - 13.26 sind Schraubverbindungen mit Halteplatten, Bohrungen in den Halteplatten, Halteschrauben und Innengewinden in der Werkzeughalterung 13. Jeder Werkzeugaussparung 13.01 - 13.06 ist ein erstes Haltemittel 13.11 - 13.16 und ein zweites Haltemittel 13.21 - 13.26 zugeordnet. Vorzugsweise weist jedes erste Haltemittel 13.11 - 13.16 eine Halteplatte und eine Halteschraube auf, und jedes zweite Haltemittel 13.21 - 13.26 weist eine Halteplatte und zwei Halteschrauben auf. Jedes erste Haltemittel 13.11 - 13.16 liegt mit einer Halteplatte auf dem Schaft eines benötigten Werkzeugs 14.01 - 14.06 auf, und jedes zweite Haltemittel 13.21 - 13.26 liegt mit einer Halteplatte auf dem Schaft eines benötigten Werkzeugs 14.01 - 14.06 auf. Aussengewinde der Halteschrauben reichen durch die Bohrungen in den Halteplatten zu den Innengewinden in der Werkzeughalterung 13. Die Schraubenverbindungen erfolgen parallel zur Horizontalachse y. Durch Verschrauben von Aussengewinden und Innengewinden pressen die Halteschrauben die Halteplatten gegen den Schaft der benötigten Werkzeuge 14.1 - 14.8 und halten die benötigten Werkzeuge 14.01 - 14.06 mit einer Haltekraft in den Werkzeugaussparungen 13.01 - 13.06.

Die Zerspanungsmaschine 1 weist einen Werkzeugschlitten 11 auf. Der Werkzeugschlitten 11 trägt die Werkzeughalterung 13. Nach dem Prinzip von Action und Reactio nimmt der Werkzeugschlitten 11 von der Werkzeughalterung 13 die Werkzeugkraft Kw auf und übt eine genauso grosse entgegengesetzt gerichtete Reaktionskraft auf die Werkzeughalterung 13 aus.

Die mit benötigten Werkzeugen 14.01 - 14.06 bestückte Werkzeughalterung 13 ist über die drei ersten Befestigungsmittel 13.31, 13.32, 13.33 und über die drei zweiten Befestigungsmittel 13.41, 13.42, 13.43 einfach und rasch am Werkzeugschlitten 11 befestigbar und vom Werkzeugschlitten 11 entfernbar. Vorzugsweise weist die Werkzeughalterung 13 drei erste Befestigungsmittel 13.31, 13.32, 13.33 und drei zweite Befestigungsmittel 13.41, 13.42, 13.43 auf. Die Befestigungsmittel 13.31, 13.32, 13.33, 13.41, 13.42, 13.43 sind Schraubenverbindungen mit Befestigungsschrauben, Bohrungen in der Werkzeughalterung 13 und Innengewinden im Werkzeugschlitten 11. Die Schraubenverbindungen erfolgen parallel zur Horizontalachse y. Aussengewinde der Befestigungsschrauben reichen durch die Bohrungen in der Werkzeughalterung 13 zu den Innengewinden im Werkzeugschlitten 11. Schraubenköpfe der Befestigungsschrauben liegen in der Werkzeughalterung 13 auf. Durch Verschrauben von Aussengewinden und Innengewinden pressen die Befestigungsschrauben die Werkzeughalterung 13 mit einer Befestigungskraft gegen den Werkzeugschlitten 11.

Der Werkzeugschlitten 11 bewegt die Werkzeughalterung 13. Dazu weist der Werkzeugschlitten 11 eine Antriebseinheit wie eine elektrische Antriebseinheit, eine pneumatische Antriebseinheit, usw. auf. Die Antriebseinheit bewegt den Werkzeughalterung 13 entlang der drei Achsen x, y und z.

Die Zerspanungsmaschine 1 weist einen Kraftaufnehmer 12 auf. Erfindungsgemäss besteht der Kraftaufnehmer 12 aus mindestens zwei Einkomponenten-Kraftaufnehmern 12.1, 12.2, 12.3. Im Beispiel gemäss den Fig. 1 - 4 besteht der Kraftaufnehmer 12 aus drei Einkomponenten-Kraftaufnehmern 12.1, 12.2, 12.3.

Der Einkomponenten-Kraftaufnehmer 12.1, 12.2, 12.3 weist ein Gehäuse aus mechanisch beständigem Material wie Stahl, Werkzeugstahl, usw. auf. Der Einkomponenten-Kraftaufnehmer 12.1, 12.2, 12.3 ist hohlzylinderförmig mit zwei Gehäusestirnflächen, zwei Mantelflächen und einer zentralen Gehäusebohrung. Die Gehäusestirnflächen liegen parallel zu einer Vertikalebene xz. Eine äussere Mantelfläche begrenzt das Gehäuse in radialer Richtung von der Gehäusebohrung weg. Eine innere Mantelfläche begrenzt das Gehäuse zur Gehäusebohrung hin. Eine Längsachse der Gehäusebohrung liegt parallel zur Horizontalachse y.

Der Einkomponenten-Kraftaufnehmer 12.1, 12.2, 12.3 ist räumlich zwischen der Werkzeughalterung 13 und dem Werkzeugschlitten 11 angeordnet. Im Beispiel gemäss Fig. 1 - 4 und 6 sind drei Einkomponenten-Kraftaufnehmer 12.1, 12.2, 12.3 auf einer Linie ZZ' entlang der Querachse x angeordnet.

Die Werkzeughalterung 13 hält den Einkomponenten-Kraftaufnehmer 12.1, 12.2, 12.3. Dazu weist die Werkzeughalterung 13 mehrere Aussparungen 13.07 - 13.09 auf. Die Aussparungen 13.07 - 13.09 liegen parallel zur Vertikalebene xz. Ein Durchmesser der Aussparungen 13.07 - 13.09 ist so gross bemessen, dass die Einkomponenten-Kraftaufnehmer 12.1, 12.2, 12.3 in die Aussparungen 13.07 - 13.09 einlegbar sind und die eingelegten Einkomponenten-Kraftaufnehmer 12.1, 12.2, 12.3 im Bereich der Aussparungen 13.07 - 13.09 über radial äussere Mantelflächen gehalten werden. Eine erste Aussparung 13.07 hält den ersten Einkomponenten-Kraftaufnehmer 12.1, eine zweite Aussparung 13.08 hält den zweiten Einkomponenten-Kraftaufnehmer 12.2, und eine dritte Aussparung 13.09 hält den dritten Einkomponenten-Kraftaufnehmer 12.3. Dieses Halten der Einkomponenten-Kraftaufnehmer 12.1, 12.2, 12.3 in den Aussparungen 13.07 - 13.09 ist platzsparend und kostengünstig, denn vorgegebene äussere Abmessungen einer herkömmlichen Werkzeughalterung werden so beibehalten und müssen nicht geändert werden.

Im Bereich der Aussparungen 13.07 - 13.09 ist die am Werkzeugschlitten 11 befestigte Werkzeughalterung 13 durch einen Spalt s vom Werkzeugschlitten 11 beabstandet. Im Bereich der zweiten Befestigungsmittel 13.41, 13.42, 13.43 ist die am Werkzeugschlitten 11 befestigte Werkzeughalterung 13 über eine Kontaktfläche 13.00 im flächigen Kontakt mit dem Werkzeugschlitten 11.

Der in die Aussparungen 13.07 - 13.09 eingelegte Einkomponenten-Kraftaufnehmer 12.1, 12.2, 12.3 ist über die ersten Befestigungsmittel 13.31 - 13.33 am Werkzeugschlitten 11 befestigt. Die ersten Befestigungsmittel 13.31 - 13.33 sind Schraubenverbindungen mit Befestigungsschrauben und Innengewinden im Werkzeugschlitten 11. Ein Durchmesser der Gehäusebohrung ist so gross bemessen, dass die Befestigungsschraube hindurch ragt. Aussengewinde der Befestigungsschrauben reichen durch die Gehäusebohrungen des Einkomponenten-Kraftaufnehmers 12.1, 12.2, 12.3 zu den Innengewinden im Werkzeugschlitten 11. Schraubenköpfe der Befestigungsschrauben liegen in der Werkzeughalterung 13 auf. Durch Verschrauben von Aussengewinden und Innengewinden pressen die Befestigungsschrauben den Einkomponenten-Kraftaufnehmer 12.1, 12.2, 12.3 mit der Befestigungskraft gegen den Werkzeugschlitten 11. Dieses Befestigen des Einkomponenten-Kraftaufnehmers 12.1, 12.2, 12.3 zwischen Werkzeughalterung 13 und Werkzeugschlitten 11 ist inelastisch und bringt den Vorteil, dass die zu messende Werkzeugkraft Kw weitgehend ungedämpft auf den Einkomponenten-Kraftaufnehmer 12.1, 12.2, 12.3 wirkt. Denn jede elastische Deformation dämpft die Werkzeugkraft Kw und verfälscht das Messen der Werkzeugkraft Kw.

Ein solcher Einkomponenten-Kraftaufnehmer 12.1, 12.2, 12.3 wird von der Anmelderin unter der Typenbezeichnung 9145B mit dem Datenblatt 9143B_000-113d-03.16 kommerziell vertrieben. Der Einkomponenten-Kraftaufnehmer 12.1, 12.2, 12.3 weist einen durch die äussere Mantelfläche begrenzten Aussendurchmesser von 24.0mm auf, einen durch die innere Mantelfläche begrenzten Innendurchmesser von 10.1mm auf, und zwischen den Gehäusestirnflächen eine Höhe von 3.5mm entlang der y-Achse auf.

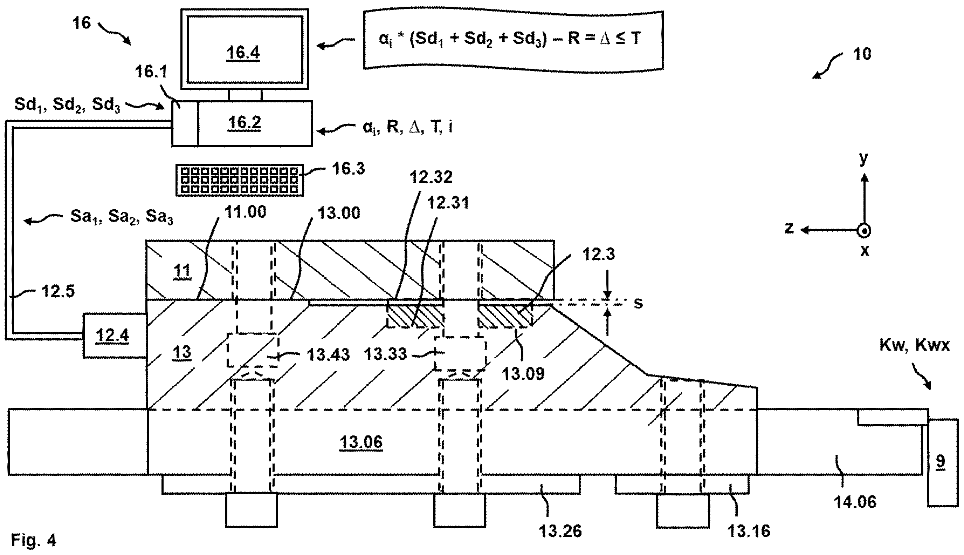

Im Vergleich mit dem eingangs erwähnten Mehrkomponenten-Kraftaufnehmer der Typenbezeichnung 9027C mit einer Höhe von 12.0mm, weist der Einkomponenten-Kraftaufnehmer 12.1, 12.2, 12.3 der Typenbezeichnung 9145B eine über dreimal geringere Höhe entlang der y-Achse auf. Aus dem massstabsgetreuen Schnitt gemäss Fig. 4 folgt, dass für einen solchen Mehrkomponenten-Kraftaufnehmer mit einer über dreimal grösseren Höhe entlang der y-Achse kein Platz in der Werkzeughalterung 13 vorhanden ist, um in dort in einer Aussparung zu halten und mit ersten Befestigungsmitteln gegen den Werkzeugschlitten 11 zu pressen.

Der Einkomponenten-Kraftaufnehmer 12.1, 12.2, 12.3 ist mit einer ersten Gehäusestirnfläche 12.11, 12.21, 12.31 im flächigen Kontakt mit der Werkzeughalterung 13 und mit einer zweiten Gehäusestirnfläche 12.12, 12.22, 12.32 im flächigen Kontakt mit dem Werkzeugschlitten 11. Dadurch, dass die Kontaktfläche 13.00 der Werkzeughalterung 13 im Bereich der Aussparungen 13.07 - 13.09 durch den Spalt s vom Werkzeugschlitten 11 beabstandet ist, liegt im Bereich der Aussparungen 13.07 - 13.09 einzig der Einkomponenten-Kraftaufnehmer 12.1, 12.2, 12.3 mit seiner zweiten Gehäusestirnflächen 12.12, 12.22, 12.32 im flächigen Kontakt am Werkzeugschlitten 11 an.

Vorzugsweise ist eine Summe der zweiten Gehäusestirnflächen 12.12, 12.22, 12.32 der mindestens zwei Einkomponenten-Kraftaufnehmer 12.1, 12.2, 12.3 grösser als die Kontaktfläche 13.00 der Werkzeughalterung 13. Somit wirkt ein grösster Teil der zu messenden Werkzeugkraft Kw über die Summe der Gehäusestirnflächen 12.12, 12.22, 12.32 auf den Werkzeugschlitten 11. Nur ein kleiner Teil der zu messenden Werkzeugkraft Kw wirkt über die Kontaktfläche 13.00 auf den Werkzeugschlitten 11. Die mindestens zwei Einkomponenten-Kraftaufnehmer 12.1, 12.2, 12.3 sind daher im Krafthauptschluss räumlich zwischen der Werkzeughalterung 13 und dem Werkzeugschlitten 11 angeordnet.

Vorzugsweise sind die mindestens zwei Einkomponenten-Kraftaufnehmer 12.1, 12.2, 12.3 in kürzerer Distanz zu den benötigten Werkzeugen 14.01 - 14.06 angeordnet, als die die Kontaktfläche 13.00. Beispielsweise beträgt im massstabsgetreuen Schnitt gemäss Fig. 4 die Distanz vom Einkomponenten-Kraftaufnehmer 12.3 zum benötigten Werkzeug 14.06 nur 66% der Distanz der Kontaktfläche 13.00 zum benötigten Werkzeug 14.06. Hieraus folgt, dass der grösste Teil der zu messenden Werkzeugkraft Kw auf die mindestens zwei Einkomponenten-Kraftaufnehmer 12.1, 12.2, 12.3 wirkt, und dass nur ein kleiner Teil der zu messenden Werkzeugkraft Kw auf die Kontaktfläche 13.00 wirkt. Auch deshalb sind die mindestens zwei Einkomponenten-Kraftaufnehmer 12.1, 12.2, 12.3 im Krafthauptschluss räumlich zwischen der Werkzeughalterung 13 und dem Werkzeugschlitten 11 angeordnet.

Bei Verwendung von einem einzigen Mehrkomponenten-Kraftaufnehmer an Stelle der mindestens zwei Einkomponenten-Kraftaufnehmer 12.1, 12.2, 12.3 wird ein solcher Krafthauptschluss nicht erreicht. Denn der eingangs erwähnte Mehrkomponenten-Kraftaufnehmer mit der Typenbezeichnung 9027C weist den gleichen Aussendurchmesser von 24.0mm auf wie der Einkomponenten-Kraftaufnehmer 12.1, 12.2, 12.3 der Typenbezeichnung 9145B. Die zweite Gehäusestirnfläche des Mehrkomponenten-Kraftaufnehmers wäre dann kleiner als die Kontaktfläche 13.00 der Werkzeughalterung 13 und der Mehrkomponenten-Kraftaufnehmer würde im Kraftnebenschluss räumlich zwischen der Werkzeughalterung 13 und dem Werkzeugschlitten 11 angeordnet sein.

Auch ist eine Gesamtkontaktfläche bestehend aus der zweiten Gehäusestirnflächen 12.12, 12.22, 12.32 der mindestens zwei Einkomponenten-Kraftaufnehmer 12.1, 12.2, 12.3 und der Kontaktfläche 13.00 der Werkzeughalterung 13 mindestens halb so gross wie eine Gesamtkontaktfläche 11.00 des Werkzeugschlittens 11 in der Vertikalebene xz. Somit sind die Werkzeughalterung 13 und der Werkzeugschlitten 11 im grossflächigen Kontakt, was den Vorteil einer hohen Steifigkeit und hohen Eigenfrequenz der Zerspanungsmaschine 10 hat, da so in der Vertikalebene xz kein mechanisches Durchbiegen möglich ist. Auch dieser Vorteil wird bei Verwendung von einem einzigen Mehrkomponenten-Kraftaufnehmer an Stelle der mindestens zwei Einkomponenten-Kraftaufnehmer 12.1, 12.2, 12.3 nicht erreicht. Denn der eingangs erwähnte Mehrkomponenten-Kraftaufnehmer mit der Typenbezeichnung 9027C weist den gleichen Aussendurchmesser von 24.0mm auf wie der Einkomponenten-Kraftaufnehmer 12.1, 12.2, 12.3 der Typenbezeichnung 9145B. Die Gesamtkontaktfläche bestehend aus der zweiten Gehäusestirnfläche des Mehrkomponenten-Kraftaufnehmers und der Kontaktfläche 13.00 der Werkzeughalterung 13 wäre dann weniger als halb so gross wie eine Gesamtkontaktfläche 11.00 des Werkzeugschlittens 11 in der Vertikalebene xz.

Der Einkomponenten-Kraftaufnehmer 12.1, 12.2, 12.3 ist ein piezoelektrischer Kraftaufnehmer mit piezoelektrischem Material aus einem Einkristall wie Quarz ($SiO_2$), Calcium-Gallo-Germanat ($Ca_3Ga_2Ge_4O_{14}$ oder CGG), Langasit ($La_3Ga_5SiO_{14}$ oder LGS), Turmalin, Galliumorthophosphat, usw. und aus Piezokeramik wie Blei-Zirkonat-Titanat ($Pb[Zr_xTi_{1-x}]O_3$, $0 \leq x \leq 1$), usw.

Das piezoelektrische Material ist hohlzylinderförmig, mit Stirnflächen die parallel zu den Gehäusestirnflächen und somit parallel zur Querebene xz liegen. Die zu messende Werkzeugkraft Kw wirkt somit auf die Stirnflächen des piezoelektrischen Materials. Das piezoelektrische Material ist so orientiert, dass es auf den Stirnflächen, auf denen die Werkzeugkraft Kw einwirkt, eine höchste Empfindlichkeit für die zu messende Werkzeugkraft Kw hat. Im Sinne der Erfindung ist die Empfindlichkeit ein Grössenverhältnis der unter der Wirkung der Werkzeugkraft Kw erzeugten Anzahl elektrischer Polarisationsladungen und der auf das piezoelektrische Material wirkenden Werkzeugkraft Kw. Bei höchster Empfindlichkeit erzeugt das piezoelektrische Material eine grösste Anzahl elektrischer Polarisationsladungen. Piezoelektrisches Material aus einem Einkristall wird daher so orientiert in Hohlzylinder geschnitten, dass es für eine auf die Stirnflächen einwirkende Werkzeugkraft Kw eine grösste Anzahl elektrischer Polarisationsladungen erzeugt. Piezoelektrisches Material aus Piezokeramik wird daher in einem elektrischen Feld so polarisiert und durch mechanisches Pressen in eine Hohlzylinderform gebracht, dass es für eine auf die Stirnflächen einwirkende Werkzeugkraft Kw eine grösste Anzahl elektrischer Polarisationsladungen erzeugt.

Die mindestens zwei Einkomponenten-Kraftaufnehmer 12.1, 12.2, 12.3 messen die Werkzeugkraft Kw. Die Werkzeugkraft Kw wird als Hauptschnittkraftkomponente Kwx gemessen. Dazu weist jeder der mindestens zwei Einkomponenten-Kraftaufnehmer 12.1, 12.2, 12.3 piezoelektrisches Material auf, das so orientiert ist, dass es für die Hauptschnittkraftkomponente Kwx mit höchster Empfindlichkeit elektrische Polarisationsladungen erzeugt. Die Werkzeugkraft Kw wird also redundant gemessen. Im Beispiel gemäss den Fig. 1 - 4 liegen drei Einkomponenten-Kraftaufnehmer 12.1, 12.2, 12.3 mit ihren Gehäusestirnflächen parallel zur Vertikalebene xz und messen die Hauptschnittkraftkomponente Kwx gemäss dem transversalen Schereffekt als Schubkraft entlang der Querachse x.

Nun ist das Messen der Werkzeugkraft Kw spezifisch für eine Lage i des benötigten Werkzeugs 14.01 - 14.06. Im Beispiel gemäss Fig. 1 - 4 hält die Werkzeughalterung 13 sechs benötigte Werkzeuge 14.01 - 14.06 in sechs verschiedenen Lagen i, i = 1 ... 6 und die Zerspanungsmaschine 1 weist drei Einkomponenten-Kraftaufnehmer 12.1, 12.2, 12.3 auf. Jedes der sechs benötigten Werkzeuge 14.01 - 14.06 liegt in unterschiedlichen Distanzen zu jedem der drei Einkomponenten-Kraftaufnehmer 12.1, 12.2, 12.3. Die unterschiedlichen Distanzen von jedem der benötigten Werkzeuge 14.01 - 14.06 zu jedem der Einkomponenten-Kraftaufnehmer 12.1, 12.2, 12.3 haben zur Folge, dass der Kraftfluss der Werkzeugkraft Kw spezifisch für die Lage i des benötigten Werkzeugs 14.01 - 14.06 zu jedem der Einkomponenten-Kraftaufnehmer 12.1, 12.2, 12.3 ist und dass jeder der Einkomponenten-Kraftaufnehmer 12.1, 12.2, 12.3 einen leicht die Werkzeugkraft Kw mit einem leicht anderen Betrag misst. Typischerweise schwankt der Betrag der gemessenen Werkzeugkraft Kw in einem Bereich von 0.75 bis 1.25. Diese Lagenspezifität beim Messen der Werkzeugkraft Kw wird durch das redundante Messen der Werkzeugkraft Kw durch mindestens zwei Einkomponenten-Kraftaufnehmer 12.1, 12.2, 12.3 gemindert. Denn Messsignale der Einkomponenten-Kraftaufnehmer 12.1, 12.2, 12.3 werden zu einem lagenspezifisch gemittelten Messsignal aufsummiert.

Die elektrischen Polarisationsladungen müssen von den Stirnflächen abgenommen werden. Dazu weisen der Einkomponenten-Kraftaufnehmer 12.1, 12.2, 12.3 Elektroden auf. Die Elektroden sind aus elektrisch leitfähigem Material wie Kupfer, Gold, usw. und hohlzylinderförmig. Je eine Elektrode ist direkt auf einer der Stirnflächen des piezoelektrischen Materials angeordnet.

Beim ersten Einkomponenten-Kraftaufnehmer 12.1 nimmt eine erste Signalelektrode elektrische Polarisationsladungen als analoge Messsignale $Sa_1$ von ersten Stirnflächen ab und eine erste Masseelektrode nimmt elektrische Polarisationsladungen von zweiten Stirnflächen ab. Beim zweiten Einkomponenten-Kraftaufnehmer 12.2 nimmt eine zweite Signalelektrode elektrische Polarisationsladungen als analoge Messsignale $Sa_2$ von ersten Stirnflächen ab und eine zweite Masseelektrode nimmt elektrische Polarisationsladungen von zweiten Stirnflächen ab. Und beim dritten Einkomponenten-Kraftaufnehmer 12.3 nimmt eine dritte Signalelektrode elektrische Polarisationsladungen als analoge Messsignale $Sa_3$ von ersten Stirnflächen ab und eine dritte Masseelektrode nimmt elektrische Polarisationsladungen von zweiten Stirnflächen ab. Die analogen Messsignale $Sa_1$, $Sa_2$, $Sa_3$ sind proportional zur Grösse der Werkzeugkraft Kw.

Die drei Signalelektroden sind gegenüber dem Gehäuse elektrisch isoliert, und die drei Masseelektroden sind elektrisch mit dem Gehäuse verbunden und liegen auf dem elektrischen Massepotenzial des Gehäuses. Weil die drei Masseelektroden alle auf dem gleichen elektrischen Massepotenzial liegen, haben sie das gleiche Bezugszeichen.

Der Einkomponenten-Kraftaufnehmer 12.1, 12.2, 12.3 ist über Signalleitungen 12.10, 12.20, 12.30 elektrisch mit einer Signalbuchse 12.4 verbunden. Eine erste Signalleitung 12.10 verbindet die erste Signalelektrode des ersten Einkomponenten-Kraftaufnehmers 12.1 mit der Signalbuchse 12.4, eine zweite Signalleitung 12.20 verbindet die zweite Signalelektrode des zweiten Einkomponenten-Kraftaufnehmers 12.2 mit der Signalbuchse 12.4, und eine dritte Signalleitung 12.30 verbindet die dritte Signalelektrode des dritten Einkomponenten-Kraftaufnehmers 12.3 mit der Signalbuchse 12.4. Die drei Signalleitungen 12.10, 12.20, 12.30 sind in mindestens einem Hohlraum 13.10 der Werkzeughalterung 13 verlegt. Vorzugsweise wird der Hohlraum 13.10 beim Befestigen der Werkzeughalterung 13 am Werkzeugschlitten 11 von der Werkzeughalterung 13 nach aussen verschlossen. Die im Hohlraum 13.10 verlegten Signalleitungen 12.10, 12.20, 12.30 sind durch diesen Verschluss vor schädlichen äusseren Einflüssen bei der spanenden Formgebung geschützt. Die Signalbuchse 12.4 ist aussenseitig an der Werkzeughalterung 13 angebracht.

Ein Signalkabel 12.5 ist von aussen mit der Signalbuchse 12.4 elektrisch kontaktierbar. Jedes Mal, wenn die Werkzeughalterung 13 am Werkzeugschlitten 11 befestigt wird, ist auch das Signalkabel 12.5 über eine Schnellkupplung einfach und rasch mit der Signalbuchse 12.4 elektrisch kontaktierbar. Umgekehrt ist beim Entfernen der Werkzeughalterung 13 vom Werkzeugschlitten 11 auch das Signalkabel 12.5 über die Schnellkupplung einfach und rasch von der Signalbuchse 12.4 elektrisch lösbar. Das elektrisch mit der Signalbuchse 12.4 kontaktierte Signalkabel 12.5 leitet die analogen Messsignale $Sa_1$, $Sa_2$, $Sa_3$ von der Signalbuchse 12.4 zu einer Auswerteeinheit 16 ab.

Für jeden Fertigungsschritt mit einem benötigten Werkzeug 14.01 - 14.06 erzeugt der erste Einkomponenten-Kraftaufnehmer 12.1 erste analoge Messsignale $Sa_1$ für die Hauptschnittkraftkomponente Kwx. Für jeden Fertigungsschritt mit einem benötigten Werkzeug 14.01 - 14.06 erzeugt der zweite Einkomponenten-Kraftaufnehmer 12.2 zweite analoge Messsignale $Sa_2$ für die Hauptschnittkraftkomponente Kwx. Und für jeden Fertigungsschritt mit einem benötigten Werkzeug 14.01 - 14.06 erzeugt der dritte Einkomponenten-Kraftaufnehmer 12.3 dritte analoge Messsignale $Sa_3$ für die Hauptschnittkraftkomponente Kwx. Jeder Fertigungsschritt dauert 1sec bis 100sec. Die Einkomponenten-Kraftaufnehmer 12.1, 12.2, 12.3 erzeugen die analogen Messsignale $Sa_1$, $Sa_2$, $Sa_3$ mit einer zeitlichen Auflösung in einem Frequenzbereich von 1kHz bis 50kHz.

Damit die Elektroden alle erzeugten elektrischen Polarisationsladungen von den Stirnflächen des piezoelektrischen Materials abnehmen, und keine elektrische Polarisationsladungen auf den Stirnflächen des piezoelektrischen Materials verbleiben und das Messen der Werkzeugkraft Kw verfälschen, werden die Elektroden mechanisch gegen die Stirnflächen des piezoelektrischen Materials vorgespannt. Durch das mechanische Vorspannen des Einkomponenten-Kraftaufnehmers 12.1, 12.2, 12.3 werden Mikroporen zwischen den Elektroden und den Stirnflächen des piezoelektrischen Materials geschlossen. Das mechanische Vorspannen des in die Aussparungen 13.07 - 13.09 eingelegten Einkomponenten-Kraftaufnehmers 12.1, 12.2, 12.3 erfolgt durch Befestigen der Werkzeughalterung 13 am Werkzeugschlitten 11 durch die ersten Befestigungsmittel 13.31, 13.32, 13.33.

Die Auswerteeinheit 16 weist mindestens eine Wandlereinheit 16.1, mindestens einen Computer 16.2, mindestens eine Eingabeeinheit 16.3 und mindestens eine Ausgabeeinheit 16.4 auf.

Der Einkomponenten-Kraftaufnehmer 12.1, 12.2, 12.3 ist über das Signalkabel 12.5 elektrisch mit der Wandlereinheit 16.1 verbunden. Die Wandlereinheit 16.1 wandelt von den Signalelektroden abgeleitete analoge Messsignale $Sa_1$, $Sa_2$, $Sa_3$ in digitale Messsignale $Sd_1$, $Sd_2$, $Sd_3$.

Der Computer 16.2 weist mindestens einen Datenprozessor und mindestens einen Datenspeicher auf. Der Computer 16.2 ist über die Eingabeeinheit 16.3 bedienbar. Die Eingabeeinheit 16.3 kann eine Tastatur sein, zur Eingabe von Steuerbefehlen. Im Sinne der Erfindung bedeutet das Verb "Bedienen", dass der Computer 16.2 von einer Person über die Eingabeeinheit 16.3 mit Steuerbefehlen gestartet, gesteuert und ausgeschaltet wird. Der Computer 16.2 liest die digitalen Messsignale $Sd_1$, $Sd_2$, $Sd_3$ ein. Der Computer 16.2 summiert eingelesene digitale Messsignale $Sd_1$, $Sd_2$, $Sd_3$ zu einem lagenspezifisch gemittelten Messsignal $(Sd_1 + Sd_2 + Sd_3)$ auf. Der Computer 16.2 stellt das lagenspezifisch gemittelte Messsignal $(Sd_1 + Sd_2 + Sd_3)$ auf der Ausgabeeinheit 16.4 dar. Die Ausgabeeinheit 16.4 kann ein Bildschirm sein, zur graphischen Darstellung der ausgewerteten digitalen Messsignale.

Bei der Auswertung der digitalen Messsignale $Sd_1$, $Sd_2$, $Sd_3$ liest der Computer 16.2 Referenzsignale R und

lagenspezifische Kalibrierfaktoren $\alpha_i$ ein.

Die Referenzsignale R sind spezifisch für den Werkstoff des Werkstücks 9 sowie für den Schneidstoff des benötigten Werkzeugs 14.01 - 14.06. Dabei sind Eigenschaften vom Werkstoff und vom Schneidstoff wie Festigkeit, Zähigkeit und Härte entscheidend. Die Referenzsignale R sind aber auch spezifisch für die Prozessparameter der spanenden Formgebung. Solche Prozessparameter sind der Vorschubgeschwindigkeit, die Zustellung, die Werkzeuggeometrie, usw. Vorzugsweise für jeden Werkstoff des Werkstücks 9 und für jeden Schneidstoff des benötigten Werkzeugs 14.01 - 14.06 und für jeden Prozessparameter der spanenden Formgebung sind Referenzsignale R im Datenspeicher des Computers 16.2 gespeichert und vom Computer 16.2 aus dem Datenspeicher auslesbar.

Um die Lagenspezifität beim Messen der Werkzeugkraft Kw weiter zu mindern, sind für jede Lage i spezifische Kalibrierfaktoren $\alpha_i$ im Datenspeicher des Computers 16.2 gespeichert und vom Computer 16.2 aus dem Datenspeicher auslesbar.

Zur Auswertung kalibriert der Computer 16.2 das lagenspezifisch gemittelte Messsignal $(Sd_1 + Sd_2 + Sd_3)$ eines benötigten Werkzeugs 14.01 - 14.06 der Lage i durch Multiplikation mit einem lagenspezifischen Kalibrierfaktor $\alpha_i$ der Lage i des benötigten Werkzeugs 14.01 - 14.06. Für jeden Verfahrensschritt bildet der Computer 16.2 eine Differenz $\Delta$ zwischen dem lagenspezifisch gemittelten Messsignal $(Sd_1 + Sd_2 + Sd_3)$ der Lage i und dem ausgelesenen Referenzsignal R für den Werkstoff des Werkstücks 9 und den Schneidstoff des benötigten Werkzeugs 14.01 - 14.06 der Lage i.

$$\alpha_i \; * \; (Sd_1 \; + \; Sd_2 \; + \; Sd_3) \; - \; R \; = \; \Delta \; \leq \; T \; = \; 10\% \; * \; R$$

Im Datenspeicher des Computers 16.2 ist mindestens eine vordefinierte Toleranzgrösse T gespeichert, welche vordefinierte Toleranzgrösse T für jeden Fertigungsschritt ausgelesen wird.

Für jeden Fertigungsschritt wird die Differenz $\Delta$ mit der vordefinierten Toleranzgrösse T verglichen. Falls die Differenz $\Delta$ kleiner/gleich als die vordefinierte Toleranzgrösse T ist, ist das benötigte Werkzeuge 14.01 - 14.06 nicht verschliessen und wird weiterverwendet, und dass falls die Differenz $\Delta$ grösser als die vordefinierte Toleranzgrösse T ist, ist das benötigte Werkzeug 14.01 - 14.06 verschliessen und wird ersetzt. In erster Näherung ist die vordefinierte Toleranzgrösse T gleich 10% des Referenzsignals R.

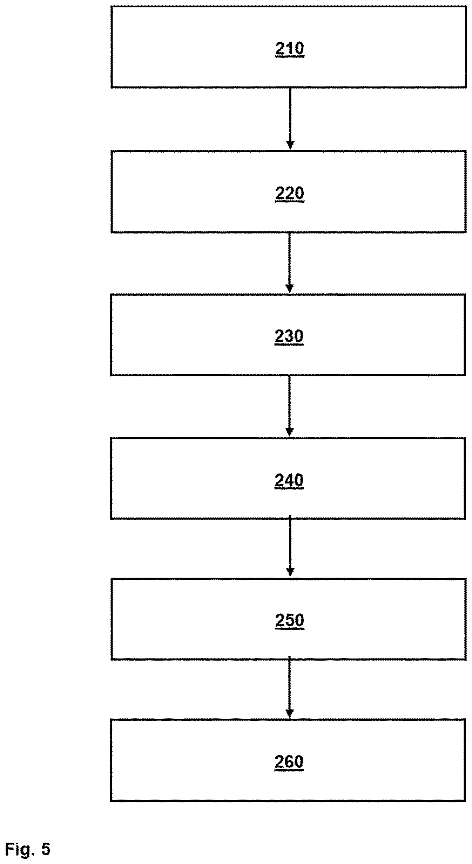

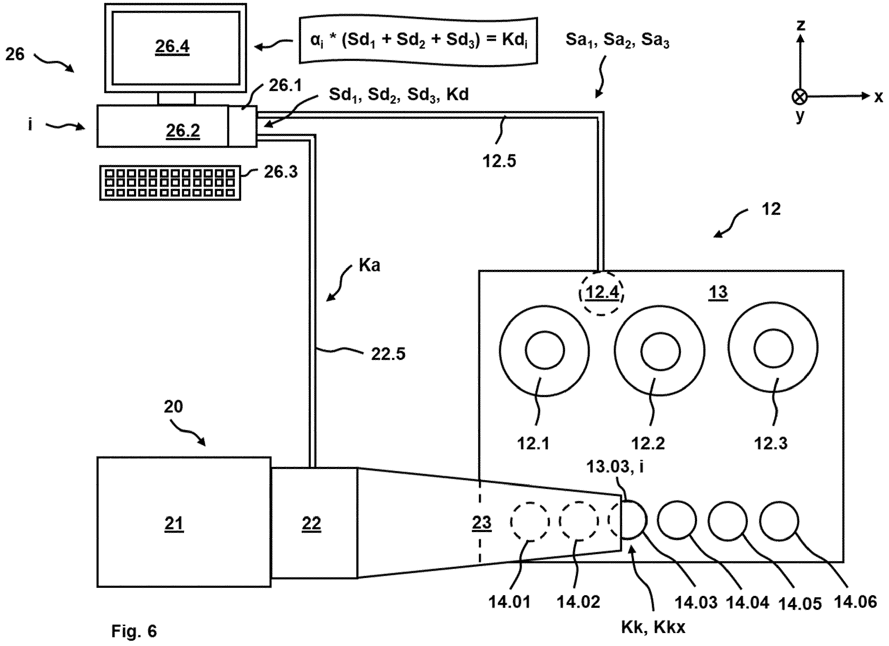

Fig. 5 zeigt ein Flussdiagramm mit Verfahrensschritten 210 - 260 zum Kalibrieren der Einkomponenten-Kraftaufnehmer 12.1, 12.2, 12.3 der Zerspanungsmaschine 10 gemäss Fig. 1. Fig. 6 zeigt Teile einer Ausführungsform einer Kalibriervorrichtung 20 zur Durchführung der Verfahrensschritte gemäss Fig. 5 mit der Werkzeughalterung 13 der Zerspanungsmaschine 10 gemäss Fig. 1.

Die Kalibriervorrichtung 20 weist einen Kalibrierkontakt 21, einen Kalibrierkraftaufnehmer 21, eine Kalibrierantriebseinheit 20 und eine Auswerteeinheit 26 auf.

In einem ersten Verfahrensschritt 210 wird ein Werkzeughalter 13 mit mindestens einem benötigten Werkzeug 14.01 - 14.06 und mit mindestens zwei Einkomponenten-Kraftaufnehmern 12.1, 12.2, 12.3 bereitgestellt. Im Beispiel gemäss Fig. 6 weist die Zerspanungsmaschine 10 drei Einkomponenten-Kraftaufnehmern 12.1, 12.2, 12.3 auf.

In einem weiteren Verfahrensschritt 220 werden die mindestens zwei Einkomponenten-Kraftaufnehmer 12.1, 12.2, 12.3 mit der Auswerteeinheit 26 kontaktiert. Die Auswerteeinheit 26 weist mindestens eine Wandlereinheit 26.1, mindestens einen Computer 26.2, mindestens eine Eingabeeinheit 26.3 und mindestens eine Ausgabeeinheit 26.4 auf.

In einem weiteren Verfahrensschritt 230 wird durch die Kalibriervorrichtung 20 eine Kalibrierkraft Kk an das benötigte Werkzeug 14.01 - 14.06 aufgebracht.

Die Kalibriervorrichtung 20 weist eine Kalibrierantriebseinheit 21, einen Kalibrierkontakt 23 und einen Kalibrierkraftaufnehmer 22 auf.

Die Kalibrierantriebseinheit 21 ist eine elektrische Antriebseinheit, eine pneumatische Antriebseinheit, usw. Die Kalibrierantriebseinheit 21 bewegt den Kalibrierkontakt 23 und den Kalibrierkraftaufnehmer 22 entlang der drei Achsen x, y und z. Die Kalibrierantriebseinheit 21 richtet den Kalibrierkontakt 23 am benötigten Werkzeug 14.01 - 14.06 in einer Lage i der Werkzeughalterung 13 präzise aus und übt die Kalibrierkraft Kk auf das benötigte Werkzeug 14.01 - 14.06 aus. Die Kalibrierkraft Kk weist eine Hauptschnittkraftkalibrierkomponente Kkx in Richtung der Querachse x auf.

Im Beispiel gemäss Fig. 6 ist der Kalibrierkontakt 23 fingerförmig und weist eine Spitze zum Ausüben der Kalibrierkraft Kk auf. Der Kalibrierkontakt 23 ist aus mechanisch beständigem Material wie Stahl, Werkzeugstahl, usw.

Der Kalibrierkraftaufnehmer 22 misst die Hauptschnittkraftkalibrierkomponente Kkx. Der Kalibrierkraftaufnehmer 22 kann nach einem beliebigen Messprinzip funktionieren. Bedingung beim Kalibrieren ist, dass der Kalibrierkraftaufnehmer 22 die Hauptschnittkraftkalibrierkomponente Kkx mit einer um mindestens eine Grössenordnung grösseren Genauigkeit als die mindestens zwei Einkomponenten-Kraftaufnehmer 12.1, 12.2, 12.3 misst. Der Kalibrierkraftaufnehmer 22 ist über ein Kalibriersignalkabel 22.5 elektrisch mit der Wandlereinheit 26.2 verbunden.

In einem weiteren Verfahrensschritt 240 wird die Hauptschnittkraftkalibrierkomponente Kkx durch die mindestens zwei Einkomponenten-Kraftaufnehmer 12.1, 12.2, 12.3 und durch den Kalibrierkraftaufnehmer 22 der Kalibriervorrichtung 20 gemessen. Im Beispiel gemäss Fig. 6 erzeugt der erste Einkomponenten-Kraftaufnehmer 12.1 erste analoge

Messsignale $Sa_1$ für die Hauptschnittkraftkalibrierkomponente Kkx, der zweite Einkomponenten-Kraftaufnehmer 12.2 erzeugt zweite analoge Messsignale $Sa_2$ für die Hauptschnittkraftkalibrierkomponente Kkx, und der dritte Einkomponenten-Kraftaufnehmer 12.3 erzeugt dritte analoge Messsignale $Sa_3$ für die Hauptschnittkraftkalibrierkomponente Kkx. Der Kalibrierkraftaufnehmer 22 erzeugt analoge Kalibriersignale Ka für die Hauptschnittkraftkalibrierkomponente Kkx.

In einem weiteren Verfahrensschritt 250 werden analoge Messsignale $Sa_1$, $Sa_2$, $Sa_3$ der mindestens zwei Einkomponenten-Kraftaufnehmer 12.1, 12.2, 12.3 und analoge Kalibriersignale Ka des Kalibrierkraftaufnehmers 22 an die Auswerteinheit 26 abgeleitet.

Die Wandlereinheit 26.1 wandelt abgeleitete analoge Messsignale $Sa_1$, $Sa_2$, $Sa_3$ in digitale Messsignale $Sd_1$, $Sd_2$, $Sd_3$. In der Ausführungsform gemäss Fig. 6 wandelt die Wandlereinheit 26.1 erste analoge Messsignale $Sa_1$ in erste digitale Messsignale $Sd_1$, die Wandlereinheit 26.1 wandelt zweite analoge Messsignale $Sa_2$ in zweite digitale Messsignale $Sd_2$, und die Wandlereinheit 26.1 wandelt dritte analoge Messsignale $Sa_3$ in dritte digitale Messsignale $Sd_3$.

Die Wandlereinheit 26.1 wandelt vom Kalibrierkraftaufnehmer 22 über das Signalkabel 22.14 abgeleitete analoge Kalibriersignale Ka in digitale Kalibriersignale Kd.

In einem weiteren Verfahrensschritt 260 werden die digitalen Messsignale $Sd_1$, $Sd_2$, $Sd_3$ und die digitalen Kalibriersignale Kd in der Auswerteeinheit 26 abgeglichen.

Der Computer 26.2 weist mindestens einen Datenprozessor und mindestens einen Datenspeicher auf. Der Computer 26.2 ist über die Eingabeeinheit 26.3 bedienbar. Die Eingabeeinheit 26.3 kann eine Tastatur sein, zur Eingabe von Steuerbefehlen. Im Sinne der Erfindung bedeutet das Verb "Bedienen", dass der Computer 26.2 von einer Person über die Eingabeeinheit 26.3 mit Steuerbefehlen gestartet, gesteuert und ausgeschaltet wird. Der Computer 26.2 liest die digitalen Messsignale $Sd_1$, $Sd_2$, $Sd_3$ und die digitalen Kalibriersignale Kd ein. Der Computer 26.2 summiert die digitalen Messsignale $Sd_1$, $Sd_2$, $Sd_3$ zu einem lagenspezifisch gemittelten Messsignal $(Sd_1 + Sd_2 + Sd_3)$ auf. Der Computer 26.2 stellt das lagenspezifisch gemittelte Messsignal $(Sd_1 + Sd_2 + Sd_3)$ auf der Ausgabeeinheit 26.4 dar. Die Ausgabeeinheit 26.4 kann ein Bildschirm sein, zur graphischen Darstellung der ausgewerteten digitalen Messsignale.

Der Computer 26.2 gleicht digitale Messsignale $Sd_1$, $Sd_2$, $Sd_3$ mit digitalen Kalibriersignalen Kd ab. Der Abgleich erfolgt spezifisch für eine Lage i eines benötigten Werkzeugs 14.01 - 14.06. Die Information über die Lage i kann über die Eingabeeinheit 26.3 eingegeben werden. Im Beispiel gemäss Fig. 6 übt der Kalibrierkontakt 23 eine Kalibrierkraft Kk auf ein drittes benötigtes Werkzeug 14.3 in einer dritten Werkzeugaussparung 13.03 aus. Die dritte Werkzeugaussparung 13.03 ist die dritte Lage i = 3, das benötigte Werkzeug 14.3 befindet sich in der dritten Lage i = 3.

Der Computer 26.2 gleicht ein lagenspezifisch gemitteltes Messsignal $(Sd_1 + Sd_2 + Sd_3)$ der Lage i mit einem digitalen Kalibriersignal Kd der Lage i ab. Ein Ergebnis dieses Abgleichs ist ein Kalibrierfaktor $\alpha_i$ der Lage i:

$$\alpha_i \ * \ (Sd_1 \ + \ Sd_2 \ + \ Sd_3) \ = \ Kd \qquad i \ = \ 1 \ ... \ 6$$

Bei Identität des lagenspezifisch gemittelten Messsignals $(Sd_1 + Sd_2 + Sd_3)$ mit dem digitalen Kalibriersignal Kd ist der Kalibrierfaktor $\alpha_i$ = 1.00. Typischerweise schwankt der Kalibrierfaktor $\alpha_i$ in einem Bereich von 0.85 bis 1.15. Der Kalibrierfaktor $\alpha_i$ ist im Datenspeicher des Computers 16 der Auswerteeinheit 16 speicherbar.

**Bezugszeichenliste**

| | |
|---|---|
| 9 | Werkstück |
| 10 | Zerspanungsmaschine |
| 11 | Werkzeugschlitten |
| 11.00 | Gesamtkontaktfläche |
| 12 | Kraftaufnehmer |
| 12.1, 12.2, 12.3 | Einkomponenten-Kraftaufnehmer |
| 12.10, 12.20, 12.30 | Signalleitungen |
| 12.11, 12.21, 12.31 | erste Gehäusestirnfläche |
| 12.12, 12.22, 12.32 | zweite Gehäusestirnfläche |
| 12.4 | Signalbuchse |
| 12.5 | Signalkabel |
| 13 | Werkzeughalterung |
| 13.00 | Kontaktfläche |
| 13.01 - 13.06 | Werkzeugaussparung |
| 13.07 - 13.09 | Aussparung |
| 13.10 | Hohlraum |

| | |
|---|---|
| 13.11 - 13.16 | erstes Haltemittel |
| 13.26 - 13.26 | zweites Haltemittel |
| 13.31 - 13.33 | erstes Befestigungsmittel |
| 13.41 - 13.43 | zweites Befestigungsmittel |
| 14.01 - 14.06 | benötigtes Werkzeug |
| 16, 26 | Auswerteeinheit |
| 16.1, 26.1 | Wandlereinheit |
| 16.2, 26.2 | Computer |
| 16.3, 26.3 | Eingabeeinheit |
| 16.4, 26.4 | Ausgabeeinheit |
| 20 | Kalibriervorrichtung |
| 21 | Kalibrierantriebseinheit |
| 22 | Kalibrierkontakt |
| 23 | Kalibrierkraftaufnehmer |
| 23.5 | Kalibriersignalkabel |
| 210 - 260 | Verfahrensschritte |
| $\alpha_i$ | lagenspezifischer Kalibrierfaktor |
| $\Delta$ | Differenz |
| i | Lage |
| Kw | Werkzeugkraft |
| Kwx | Hauptschnittkraftkomponente |
| Kwy | Passivkraftkomponente |
| Kwz | Vorschubkraftkomponente |
| Kk | Kalibrierkraft |
| Kkx | Hauptschnittkraftkalibrierkomponente |
| $Sa_1, Sa_2, Sa_3$ | analoges Messsignal |
| $Sd_1, Sd_2, Sd_3$ | digitales Messsignal |
| $(Sd_1 + Sd_2 + Sd_3)$ | lagenspezifisch gemitteltes Messsignal |
| R | Referenzsignal |
| Ka | analoges Kalibriersignal |
| Kd | digitales Kalibriersignal |
| s | Spalt |
| T | vordefinierte Toleranzgrösse |
| x | Querachse |
| y | Horizontalachse |
| z | Vertikalachse |
| xy | Querebene |
| xz | Vertikalebene |

**Patentansprüche**

1. Zerspanungsmaschine (1) zur spanenden Formgebung eines Werkstücks (9), welche spanende Formgebung in einer zeitlichen Abfolge von Fertigungsschritten mit mehreren benötigten Werkzeugen (14.01 - 14.06) erfolgt; wobei in jedem Fertigungsschritt ein benötigtes Werkzeug (14.01 - 14.06) eine Werkzeugkraft (Kw) auf das Werkstück (9) ausüben kann; mit einer Werkzeughalterung (13) zum Halten der benötigten Werkzeuge (14.01 - 14.06); und mit einem Werkzeugschlitten (11) zum Bewegen der Werkzeughalterung (13), durch welches Bewegen der Werkzeughalterung (13) in jedem Fertigungsschritt eines der benötigten Werkzeuge (14.01 - 14.06) an einem Werkstück (9) ausrichtbar ist und das benötigte Werkzeug (14.01 - 14.06) und das Werkstück (9) zur spanenden Formgebung gegeneinander bewegbar sind; **dadurch gekennzeichnet, dass** die Werkzeughalterung (13) mindestens zwei Einkomponenten-Kraftaufnehmer (12.1, 12.2, 12.3) aufweist; und dass die Einkomponenten-Kraftaufnehmer (12.1, 12.2, 12.3) eine bei der spanenden Formgebung eines Werkstücks (9) von einem der benötigten Werkzeuge (14.01 - 14.06) ausgeübte Werkzeugkraft (Kw) im Krafthauptschluss messen.

2. Zerspanungsmaschine (1) nach Anspruch 1, **dadurch gekennzeichnet, dass** die Werkzeughalterung (13) mehrere Aussparungen (13.07 - 13.09) und mindestens einen Hohlraum (13.10) aufweist; dass die Einkomponenten-Kraftaufnehmer (12.1, 12.2, 12.3) in die Aussparungen (13.07 - 13.09) eingelegt sind; dass die Einkomponenten-Kraftaufnehmer (12.1, 12.2, 12.3) über Signalleitungen (12.10, 12.20, 12.30) mit einer Signalbuchse (12.4) elektrisch verbunden sind; und dass die Signalleitungen (12.10, 12.20, 12.30) im Hohlraum (13.10) verlegt sind.

3. Zerspanungsmaschine (1) nach Anspruch 2, **dadurch gekennzeichnet, dass** die Werkzeughalterung (13) erste Befestigungsmittel (13.31, 13.32, 13.33) und zweite Befestigungsmittel (13.41, 13.42, 13.43) aufweist; und dass die Werkzeughalterung (13) über die ersten Befestigungsmittel (13.31, 13.32, 13.33) und über die zweiten Befestigungsmittel (13.41, 13.42, 13.43) am Werkzeugschlitten (11) befestigt ist.

4. Zerspanungsmaschine (1) nach Anspruch 3, **dadurch gekennzeichnet, dass** die am Werkzeugschlitten (11) befestigte Werkzeughalterung (13) in einem Bereich der Aussparungen (13.07 - 13.09) durch einen Spalt (s) vom Werkzeugschlitten (11) beabstandet ist; und dass die in die Aussparungen (13.07 - 13.09) eingelegten Einkomponenten-Kraftaufnehmer (12.1, 12.2, 12.3) im Bereich der Aussparungen (13.07 - 13.09) mit zweiten Gehäusestirnflächen (12.12, 12.22, 12.32) im flächigen Kontakt mit dem Werkzeugschlitten (11) sind.

5. Zerspanungsmaschine (1) nach Anspruch 4, **dadurch gekennzeichnet, dass** die am Werkzeugschlitten (11) befestigte Werkzeughalterung (13) in einem Bereich der zweiten Befestigungsmittel (13.41, 13.42, 13.43) über eine Kontaktfläche (13.00) im flächigen Kontakt mit dem Werkzeugschlitten (11) ist; und dass der Werkzeugschlitten (11) den Hohlraum (13.10) der am Werkzeugschlitten (11) befestigten Werkzeughalterung (13) nach aussen verschliesst.

6. Zerspanungsmaschine (1) nach Anspruch 5, **dadurch gekennzeichnet, dass** eine Summe der zweiten Gehäusestirnflächen (12.12, 12.22, 12.32) der Einkomponenten-Kraftaufnehmer (12.1, 12.2, 12.3) grösser ist als die Kontaktfläche (13.00) der Werkzeughalterung (13).

7. Zerspanungsmaschine (1) nach einem der Ansprüche 2 bis 6, **dadurch gekennzeichnet, dass** die ersten Befestigungsmittel (13.31, 13.32, 13.33) die in die Aussparungen (13.07 - 13.09) eingelegten Einkomponenten-Kraftaufnehmer (12.1, 12.2, 12.3) durch Befestigen der Werkzeughalterung (13) am Werkzeugschlitten (11) mechanisch vorspannen.

8. Zerspanungsmaschine (1) nach einem der Ansprüche 2 bis 7 6, **dadurch gekennzeichnet, dass** die Werkzeughalterung (13) eine Signalbuchse (12.4) aufweist; dass die Signalbuchse (12.4) aussenseitig an der Werkzeughalterung (13) angebracht ist; und dass die Signalbuchse (12.4) über ein Signalkabel (12.5) von aussen elektrisch kontaktierbar ist.

9. Verwendung einer Zerspanungsmaschine (1) zur spanenden Formgebung eines Werkstücks (9), welche spanende Formgebung in einer zeitlichen Abfolge von Fertigungsschritten mit mehreren benötigten Werkzeugen (14.01 - 14.06) erfolgt; wobei in jedem Fertigungsschritt ein benötigtes Werkzeug (14.01 - 14.06) eine Werkzeugkraft (Kw) auf das Werkstück (9) ausübt; mit einer Werkzeughalterung (13) zum Halten der benötigten Werkzeuge (14.01 - 14.06); und mit einem Werkzeugschlitten (11) zum Bewegen der Werkzeughalterung (13), durch welches Bewegen der Werkzeughalterung (13) in jedem Fertigungsschritt eines der benötigten Werkzeuge (14.01 - 14.06) an einem Werkstück (9) ausgerichtet werden und das benötigte Werkzeug (14.01 - 14.06) und das Werkstück (9) zur spanenden Formgebung gegeneinander bewegt werden; **dadurch gekennzeichnet, dass** die Werkzeughalterung (13) mindestens zwei Einkomponenten-Kraftaufnehmer (12.1, 12.2, 12.3) aufweist; und dass die Einkomponenten-Kraftaufnehmer (12.1, 12.2, 12.3) eine bei der spanenden Formgebung eines Werkstücks (9) von einem der benötigten Werkzeuge (14.01 - 14.06) ausgeübte Werkzeugkraft (Kw) im Krafthauptschluss messen.

10. Verwendung nach Anspruch 9, **dadurch gekennzeichnet, dass** das benötigte Werkzeug (14.01 - 14.06) bei der spanenden Formgebung des Werkstücks (9) eine Schnittbewegung in Richtung einer Querachse (x) ausführt, wodurch die Werkzeugkraft (Kw) in Richtung der Querachse (x) eine Hauptschnittkraftkomponente (Kwx) aufweist; dass jeder Einkomponenten-Kraftaufnehmer (12.1, 12.2, 12.3) in jedem Fertigungsschritt die Werkzeugkraft (Kw) unabhängig vom anderen Einkomponenten-Kraftaufnehmer (12.1, 12.2, 12.3) als Hauptschnittkraftkomponente (Kwx) misst; und dass die Einkomponenten-Kraftaufnehmer (12.1, 12.2, 12.3) für die gemessene Hauptschnittkraftkomponente (Kwx) analoge Messsignale ($Sa_1$, $Sa_2$, $Sa_3$) erzeugen.

11. Verwendung nach Anspruch 10, **dadurch gekennzeichnet, dass** die Werkzeughalterung (13) die benötigten Werkzeuge (14.01 - 14.06) in unterschiedlichen Lagen (i) hält; dass bei der spanenden Formgebung ein Kraftfluss der Werkzeugkraft (Kw) spezifisch für die Lage (i) eines benötigten Werkzeugs (14.01 - 14.06) zu jedem der Einkomponenten-Kraftaufnehmer (12.1, 12.2, 12.3) ist; und dass jeder der Einkomponenten-Kraftaufnehmer (12.1, 12.2, 12.3) die Werkzeugkraft (Kw) lagespezifisch misst.

12. Verwendung nach Anspruch 11, **dadurch gekennzeichnet, dass** die Zerspanungsmaschine (1) mindestens eine Wandlereinheit (16.1) aufweist, welche Wandlereinheit (16.1) für jeden Fertigungsschritt mit einem benötigten Werkzeug (14.01 - 14.06) analoge Messsignale ($Sa_1$, $Sa_2$, $Sa_3$) in digitale Messsignale ($Sd_1$, $Sd_2$, $Sd_3$) wandelt; und dass die Zerspanungsmaschine (1) mindestens einen Computer (16.2) aufweist, welcher Computer (16.2) für jeden Fertigungsschritt die digitalen Messsignale ($Sd_1$, $Sd_2$, $Sd_3$) zu einem lagespezifisch gemittelten Messsignal ($Sd_1$ + $Sd_2$ + $Sd_3$) aufsummiert.

13. Verwendung nach Anspruch 12, **dadurch gekennzeichnet, dass** im Computer (16.2) für einen Werkstoff des Werkstücks (9) und für einen Schneidstoff eines benötigten Werkzeugs (14.01 - 14.06) Referenzsignale (R) gespeichert sind, dass der Computer (16.2) für jeden Fertigungsschritt ein Referenzsignal (R) ausliest; dass im Computer (16.2) für eine Lage (i) eines benötigten Werkzeugs (14.01 - 14.06) zum Einkomponenten-Kraftaufnehmer (12.1, 12.2, 12.3) Kalibrierfaktoren ($\alpha_i$) gespeichert sind; dass der Computer (16.2) für jeden Fertigungsschritt einen Kalibrierfaktor ($\alpha_i$) ausliest; dass der Computer (16.2) für jeden Fertigungsschritt das lagespezifisch gemittelte Messsignal ($Sd_1$ + $Sd_2$ + $Sd_3$) mit einem ausgelesenen Kalibrierfaktor ($\alpha_i$) multipliziert; und dass der Computer (16.2) für jeden Fertigungsschritt eine Differenz ($\Delta$) zwischen dem mit einem ausgelesenen Kalibrierfaktor ($\alpha_i$) multiplizierten lagespezifisch gemittelten Messsignal ($Sd_1$ + $Sd_2$ + $Sd_3$) und dem ausgelesenen Referenzsignal (R) bildet.

14. Verwendung nach Anspruch 12, **dadurch gekennzeichnet, dass** im Computer (16.2) vordefinierte Toleranzgrössen (T) gespeichert sind; dass der Computer (16.2) für jeden Fertigungsschritt eine vordefinierte Toleranzgrösse (T) ausliest; dass der Computer (16.2) für jeden Fertigungsschritt eine Differenz ($\Delta$) mit der vordefinierten Toleranzgrösse (T) vergleicht; dass falls die Differenz ($\Delta_1$) kleiner/gleich als die vordefinierte Toleranzgrösse (T) ist, das benötigte Werkzeuge (14.01 - 14.06) nicht verschliessen ist und weiterverwendet wird; und dass falls die Differenz ($\Delta$) grösser als die vordefinierte Toleranzgrösse (T) ist, das benötigte Werkzeuge (14) verschliessen ist und ersetzt wird.

15. Verfahren zum Kalibrieren von Einkomponenten-Kraftaufnehmern (12.1, 12.2, 12.3) einer Zerspanungsmaschine (1) nach einem der Ansprüche 1 bis 8, unter Verwendung eines Kalibrierkraftaufnehmers (22), **dadurch gekennzeichnet, dass** in einem ersten Verfahrensschritt (210) ein Werkzeughalter (13) der Zerspanungsmaschine (1) bereitgestellt wird, welcher Werkzeughalter (13) mindestens ein benötigtes Werkzeug (14.01 - 14.06) und mindestens zwei Einkomponenten-Kraftaufnehmer (12.1, 12.2, 12.3) aufweist, welches benötigte Werkzeug (14.01 - 14.06) in einer Lage (i) zu den Einkomponenten-Kraftaufnehmern (12.1, 12.2, 12.3) angeordnet ist; dass in einem weiteren Verfahrensschritt (230) eine Kalibrierkraft (Kk) an das benötigte Werkzeug (14.01 - 14.06) aufgebracht wird; dass in einem weiteren Verfahrensschritt (240) die Kalibrierkraft (Kk) von den Einkomponenten-Kraftaufnehmern (12.1, 12.2, 12.3) und vom Kalibrierkraftaufnehmer (22) gemessen wird; dass von den Einkomponenten-Kraftaufnehmern (12.1, 12.2, 12.3) für die gemessene Kalibrierkraft (Kk) analoge Messsignale ($Sa_1$, $Sa_2$, $Sa_3$) erzeugt werden; dass vom Kalibrierkraftaufnehmer (22) für die gemessene Kalibrierkraft (Kk) analoge Kalibriersignale (Ka) erzeugt werden; dass analoge Messsignale ($Sa_1$, $Sa_2$, $Sa_3$) in digitale Messsignale ($Sd_1$, $Sd_2$, $Sd_3$) gewandelt werden; dass analoge Kalibriersignale (Ka) in digitale Kalibriersignale (Kd) gewandelt werden; und dass in einem weiteren Verfahrensschritt (260) digitale Messsignale ($Sd_1$, $Sd_2$, $Sd_3$) zu einem lagespezifisch gemittelten Messsignal ($Sd_1$ + $Sd_2$ + $Sd_3$) aufsummiert werden; und dass das lagespezifisch gemittelte Messsignal ($Sd_1$ + $Sd_2$ + $Sd_3$) der Lage (i) des benötigten Werkzeugs (14.01 - 14.06) mit einem digitalen Kalibriersignal (Kd) der Lage (i) des benötigten Werkzeugs (14.01 - 14.06) abgeglichen wird, wobei ein Ergebnis des Abgleichs ein für die Lage (i) des benötigten Werkzeugs (14.01 - 14.06) zu den Einkomponenten-Kraftaufnehmern (12.1, 12.2, 12.3) spezifischer Kalibrierfaktor ($\alpha_i$) ist.

Fig. 1

Fig. 2

$$\alpha_i * (Sd_1 + Sd_2 + Sd_3) - R = \triangle \leq T$$

Fig. 3

$$\alpha_i * (Sd_1 + Sd_2 + Sd_3) - R = \Delta \leq T$$

Fig. 4

Fig. 5

Fig. 6

$\alpha_i * (Sd_1 + Sd_2 + Sd_3) = Kd_i$

$Sa_1, Sa_2, Sa_3$

$Sd_1, Sd_2, Sd_3, Kd$

EP 3 881 969 A1

**Europäisches Patentamt**

**European Patent Office**

**Office européen des brevets**

## EUROPÄISCHER RECHERCHENBERICHT

**Nummer der Anmeldung**

EP 20 16 4251

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 321 599 A1 (KISTLER INSTRUMENTE AG [CH]) 28. Juni 1989 (1989-06-28) | 1-3,7-9, 13,14 | INV. B23Q17/09 B23B29/26 |
| A | * Spalte 6, Zeilen 45-57; Abbildungen 1-4 * | 4-6,15 | |
| | ----- | | |
| X | JP S47 12583 U (X) 14. Oktober 1972 (1972-10-14) * Abbildungen 1-2 * | 1-3,7,9 | |
| | ----- | | |
| X | DE 34 40 670 A1 (PROMETEC GMBH [DE]) 7. Mai 1986 (1986-05-07) | 1,9-12 | |
| A | * Ansprüche 1,3,5,12,19-20; Abbildungen 1-4 * | 15 | |
| | ----- | | |
| X | US 3 826 131 A (PRITSCHOW G) 30. Juli 1974 (1974-07-30) * Spalte 2, Zeilen 9-64; Abbildungen 1-2 * | 1,9 | |
| | ----- | | |
| X | CN 104 139 322 A (HARBIN INST OF TECHNOLOGY) 12. November 2014 (2014-11-12) * Seiten 1,9; Abbildungen 1,4 * | 1,9 | RECHERCHIERTE SACHGEBIETE (IPC) |
| | ----- | | |
| A | EP 3 031 556 A1 (DIAMETAL AG [CH]; OP DE HIPT MICHAEL [CH]) 15. Juni 2016 (2016-06-15) * Abbildung 1 * | 1,9,15 | B23Q B23G B23B |
| | ----- | | |

Der vorliegende Recherchenbericht wurde für alle Patentansprüche erstellt

| Recherchenort | Abschlußdatum der Recherche | Prüfer |
|---|---|---|
| München | 22. September 2020 | Lasa Goñi, Andoni |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 16 4251

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2020

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| EP 0321599 | A1 | | 28-06-1989 | AT | 81807 | T | 15-11-1992 |
| | | | | EP | 0321599 | A1 | 28-06-1989 |
| | | | | JP | H01301045 | A | 05-12-1989 |
| | | | | US | 4899594 | A | 13-02-1990 |
| JP S4712583 | U | | 14-10-1972 | KEINE | | | |
| DE 3440670 | A1 | | 07-05-1986 | KEINE | | | |
| US 3826131 | A | | 30-07-1974 | DE | 2149438 | A1 | 05-04-1973 |
| | | | | FR | 2155400 | A5 | 18-05-1973 |
| | | | | GB | 1411993 | A | 29-10-1975 |
| | | | | US | 3826131 | A | 30-07-1974 |
| CN 104139322 | A | | 12-11-2014 | KEINE | | | |
| EP 3031556 | A1 | | 15-06-2016 | DE | 102015121392 | A1 | 09-06-2016 |
| | | | | EP | 3031556 | A1 | 15-06-2016 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0433535 A1